# EUROPÄISCHE PATENTSCHRIFT

(11) **EP 1 849 353 B1**
(45) Veröffentlichungstag und Bekanntmachung des Hinweises auf die Patenterteilung: **24.11.2010**
(21) Anmeldenummer: 07008367.0
(22) Anmeldetag: 25.04.2007
(51) Int. Cl.: A01G 23/099

(54) **Haltevorrichtung für Baumteile zum Abtrennen derselben**
Clamping device for parts of a tree for sawing off the same
Dispositif de retenue pour parties ligneuses destiné à les séparer

(30) Priorität: 26.04.2006 DE 202006006701 U
(43) Veröffentlichungstag der Anmeldung: 31.10.2007
(73) Patentinhaber: Schuller, Karin, 74343 Sachsenheim (DE); Schuller, Monika, 74343 Sachsenheim (DE)
(72) Erfinder: Schuller, Karin, 74343 Sachsenheim (DE); Schuller, Monika, 74343 Sachsenheim (DE)
(74) Vertreter: Fleck, Hermann-Josef

(56) Entgegenhaltungen:
- DE-A1- 10 022 885
- DE-B- 1 033 947
- DE-B3- 10 315 939
- DE-B3-102004 060 833
- FR-A- 2 824 447
- US-A1- 2004 178 397

## Beschreibung

Die Erfindung bezieht sich auf eine Haltevorrichtung für Baumteile beim Abtrennen derselben.

Das Abtrennen von Baumteilen, beispielsweise das Absägen von Ästen ist - besonders auf engstem Raum - oft nur mit Risiko oder technischem Aufwand möglich.

Eine Haltevorrichtung der vorstehenden Art zeigt die DE 103 15 939 B3. Diese Haltevorrichtung für Baumteile weist zwei um eine Scharnierachse schwenkbare Schenkel auf, die im unteren Bereich zum Fällen eines Baumes an diesem festgelegt werden, wonach der zu fällende Baum zu der Seite umfällt, auf der das Scharnier angeordnet ist. Anschließend kann der Baumstamm gelöst werden, indem der obere Schenkel von diesem abgenommen wird.

Eine ähnliche Haltevorrichtung zum Fällen von Bäumen zeigt auch die DE 100 22 885 A1.

Weitere Hilfsvorrichtungen zum Fällen von Bäumen sind in der DE 10 33 947 B, der FR 2 824 447 A und der US 2004/178397 A1 angegeben.

Auch die nicht vorveröffentlichte DE 10 2004 060 833 B3 zeigt ein Baumschamier zum Fällen von Bäumen, wobei der eine Scharnierteil an dem wurzelnahen Stammende befestigt wird, während der andere Schenkel an dem anschließenden Teil des Stammes festgelegt wird. Hierbei ist das Drehgelenk zwischen den beiden Scharnierschenkeln so ausgebildet, dass ein flach ausgestalteter Scharnierbolzen automatisch unter einem bestimmten Kippwinkel des Baumstammes aus seinem Lager an dem unteren Scharnierteil herausgeführt wird.

Das Dokument EP1671533 offenbart eine Haltevorrichtung mit einem Scharnier, das einen Verschwenkbaren Schenkel umfasst, an dem beide Baumteile befestigbar und relativ zueinander lösbar sind.

Der Erfindung liegt die Aufgabe zugrunde, eine Haltevorrichtung für Baumteile der eingangs genannten Art bereit zu stellen, mit der die Arbeiten beim Abtrennen von Baumteilen einfacher und sicherer werden.

Diese Aufgabe wird mit der Haltevorrichtung nach Anspruch 1 gelöst. Dieses besteht im Wesentlichen aus einem stabilen Scharnier, das zwei um eine Scharnierachse verschwenkbare, an dem feststehenden Baumteil einerseits und an dem abzutrennenden Baumteil andererseits befestigbare Schenkel aufweist, die voneinander lösbar sind, wonach dann der abgetrennte Baumteil absenkbar ist.

Vorteilhafte Ausgestaltungen sind in den weiteren Ansprüchen angegeben.

Das Scharnier weist als körperliche Schwenkachse einen Bolzen auf, der auch konisch ausgeführt sein kann, und der herausziehbar ist.

Eine weitere vorteilhafte Ausgestaltung besteht darin, dass an den Schenkeln des Scharniers halbrunde oder winkelförmige Befestigungsteile befestigt sind.

Eine weitere vorteilhafte Ausgestaltung besteht darin, dass die Befestigungsteile auf der Innenseite Verkrallungszapfen oder -spitzen aufweisen.

Eine weitere vorteilhafte Ausgestaltung besteht darin, dass Befestigungsteile Aufnahmeteile z. B. mindestens eine Öse, mindestens eine Bohrung oder mindestens einen Bolzen für eine Spannvorrichtung aufweisen.

Eine weitere vorteilhafte Ausgestaltung besteht darin, dass die Befestigungsteile fest oder in sich beweglich ausgeführt sind, um sich besser dem Baumstamm anpassen zu können.

Eine weitere vorteilhafte Ausgestaltung besteht darin, dass der Bolzen mit einer lösbaren Haltesicherung gehalten ist.

Eine weitere vorteilhafte Ausgestaltung besteht darin, dass sie eine Aufnahmevorrichtung für ein Ablassseil aufweist, das einerseits an dem am feststehenden Baumteil angebrachten Scharnierteil geführt und andererseits an dem am abgetrennten Baumteil angebrachten Scharnierteil angebunden ist.

Ausführungsbeispiele zeigen die Figuren, nämlich
- Fig. 1: eine Haltevorrichtung mit einem Baumfällkippscharnier
Axonometrie,
- Fig. 2: Baumfällkippscharnier
Axonometrie,
- Fig. 3: Phase 1 des Vorganges:
Baumfällkippscharnier wird am Baumstamm befestigt,
- Fig. 4: Phase 2 des Vorgangs:
oberer Baumabschnitt kippt über das Scharnier ab Axonometrie
- Fig. 5: Phase 3 des Vorgangs:
Scharnierbolzen wird herausgezogen
Axonometrie,
- Fig. 6: Phase 4 des Vorgangs:
oberer Baumabschnitt wird mittels Seil herunter gelassen Axonometrie - und
- Fig. 7: eine weitere Ausgestaltung der Haltevorrichtung.

An beiden Seiten des Scharniers 1, vorzugsweise an dessen Schenkeln, die auch sehr kurz ausgestaltet sein können, befindet sich mindestens ein Befestigungsteil 3a und 3b, welches das Herausrutschen des Baumstammes während des Abkippens verhindert. An den Befestigungsteilen 3a und 3b sind Aufnahmeteile 4 für einen Spanngurt 5 oder ähnliche Spannmöglichkeiten angeordnet.

Die Befestigungsteile 3a und 3b können aus einem gebogenen oder winkelförmigen Flacheisen bestehen, welches im Winkel von ca. 90° beabstandet am Scharnier 1 befestigt ist. Die Befestigungsteile 3a und 3b können fest oder in sich beweglich ausgeführt sein, um sich besser dem Baumstamm anpassen zu können.

Am Ende des gebogenen oder winkelförmigen Flacheisens befinden sich Aufnahmeteile 4, z. B. Ösen oder Bolzen für die Spannvorrichtung 6 des Spanngurtes 5 oder Kette oder Seil. An der Innenseite des Flacheisens sind Verkrallungselemente 7, z.B. spitze konische Stifte (Zapfen) angebracht, welche den Baumstamm festhalten, damit dieser beim Abkippen nicht herausrutscht.

Am oberen Befestigungsteil 3a befindet sich eine Öse 8 oder ein ähnliches Teil, welche das Befestigen eines Seils, das über das untere Befestigungsteil 3a geführt wird, ermöglicht. Das Absägen des Baumabschnittes beginnt auf der gegenüberliegenden Seite des Scharniers, etwa in Höhe der Scharnierachse. Nach dem Durchsägen des Baumes kippt dieser über das Scharnier ab. Der abgekippte Baumabschnitt kann herabgelassen werden, indem ein Seilende durch das Befestigungsteil 3b, welches sich an dem verbleibenden Baumstamm befindet, durchgeführt und an der Öse 8 des Befestigungsteils 3a am abgekippten Baumabschnitt befestigt wird. Nun wird der Scharnierbolzen 2 herausgezogen und der Baumabschnitt kann mit dem Seil herunter gelassen werden.

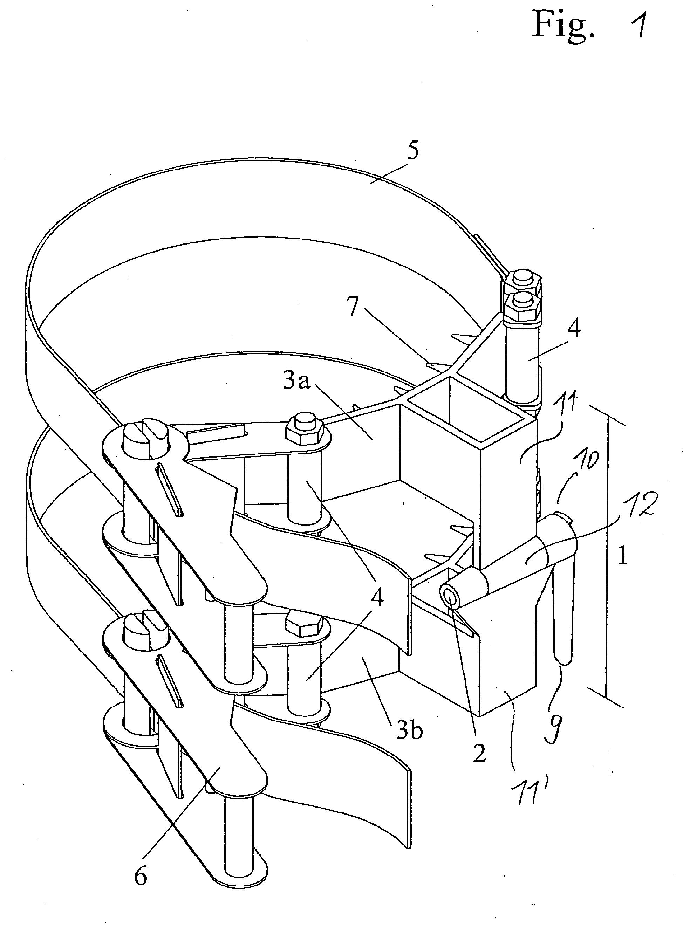

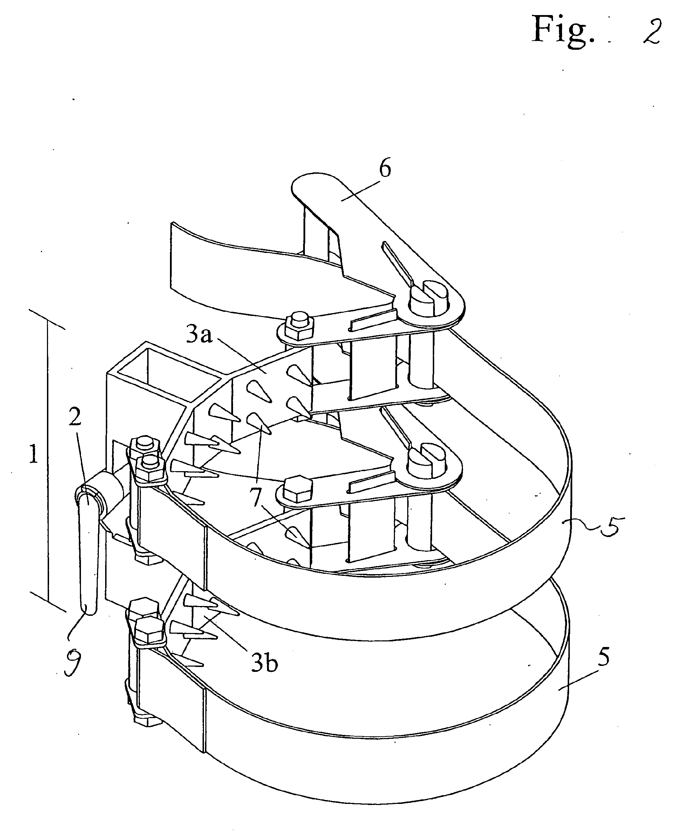

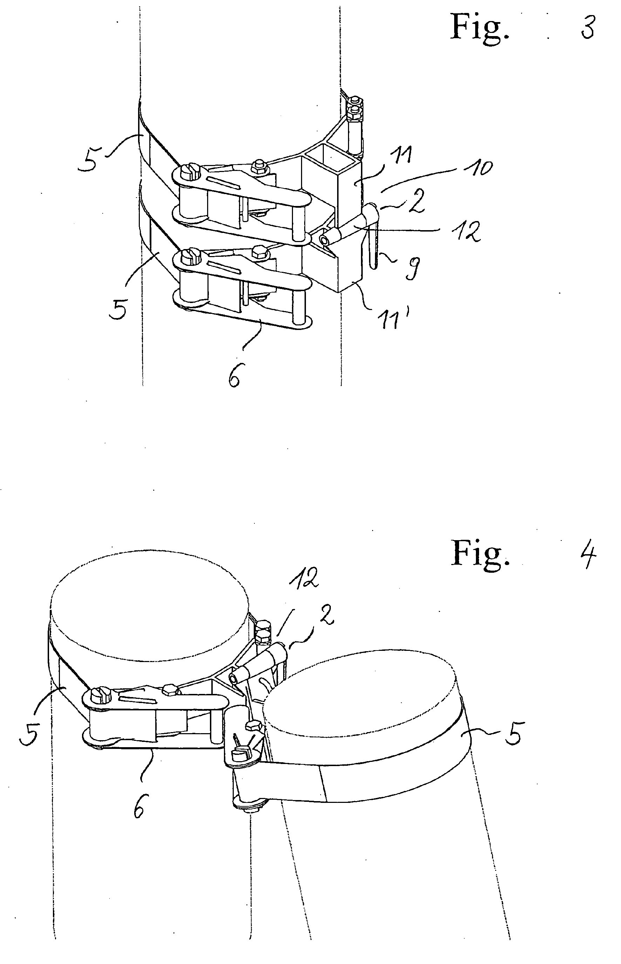

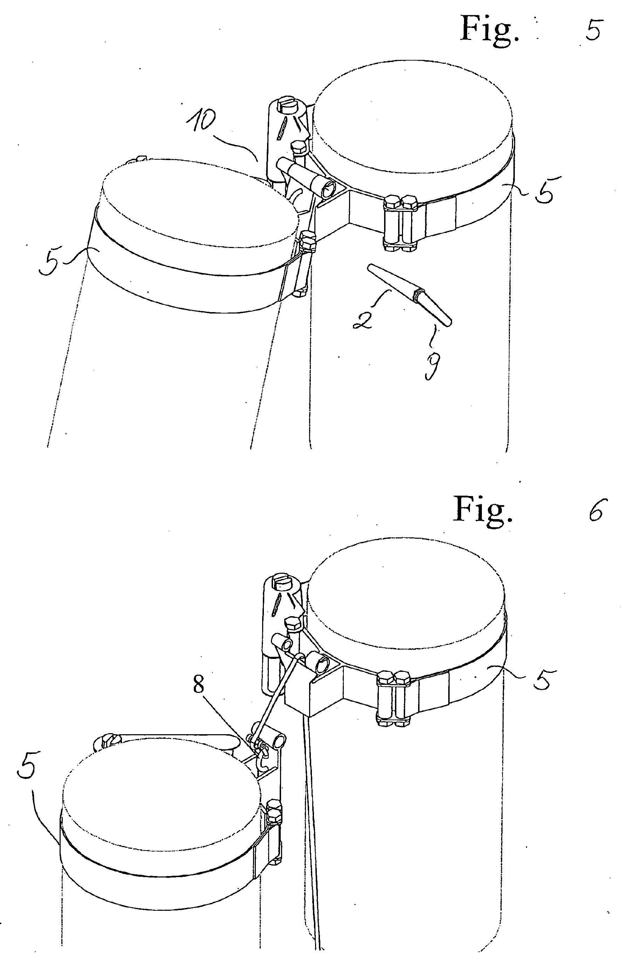

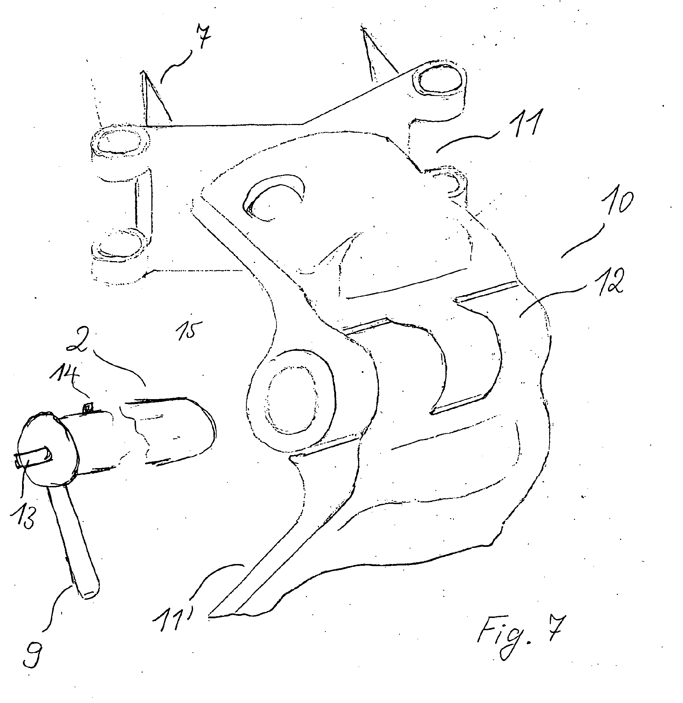

Die Fig. 1 bis 6 zeigen als weitere Merkmale einen zentralen Scharnierabschnitt 12, in dem die beiden Schenkel 11, 11' des Scharniers 10 mittels der Scharnierachse in Form des Bolzens 2 zusammengehalten sind. Die Schenkel 11, 11' selbst können unterschiedlich ausgestaltet sein und weisen vorliegend kurze stabile Profilabschnitte auf, die einerseits Lageraugen der Scharnierachse zum Durchführen des Bolzens 2 und andererseits Profilabschnitte aufweisen, an deren den aufzunehmenden Baumteilen zugekehrten Innenseiten die Befestigungsteile 3a und 3b mit den daran angebrachten Verkrallungselementen in Form spitzer Strukturen, z. B. spitzer Zapfen, angebracht sind. An dem Scharnierbolzen 2 ist auf einer Seite ein Handgriff 9 befestigt, um den Bolzen 2 leicht herausziehen bzw. einsetzen zu können. Damit der Bolzen 2 im Scharnier gesichert ist und sich nicht unbeabsichtigt lösen kann, ist, wie Fig. 7 zeigt, an diesem eine lösbare Haltesicherung mit Elementen 13, 14 ausgebildet, wobei das Element 14 an der Außenseite des Bolzens 2 vorsteht und in eine Vertiefung in den Scharnieraugen eingreift bzw. der Bolzenführung, so dass sich aber die Schenkel in dem Scharnier ungehindert zueinander verschwenken lassen. Mittels eines Freigabeelementes 13 kann das Halteelement 14 zurückgezogen und anschließend der entsicherte Bolzen 2 herausgezogen werden.

Um das Seil an dem Befestigungsteil 3b oder einem anderen Abschnitt des betreffenden Schenkels, der an dem feststehenden Baumteil verbleibt, einfach festhalten und führen zu können, ist in dem Befestigungsteil 3b bzw. Schenkel ein Loch 15 oder aber eine weitere Öse oder ähnliches Führungs- und Halteelement für das Seil vorhanden.

## Patentansprüche

1. Haltevorrichtung für Baumteile beim Abtrennen derselben, die ein Scharnier (1) aufweist, dessen um eine Scharnierachse verschwenkbare Schenkel (11, 11') an dem feststehenden Baumteil einerseits und an dem abzutrennenden Baumteil andererseits festlegbar sind und das als körperliche Schwenkachse einen Bolzen (2) aufweist, wobei die Schenkel (11, 11') oder Teile derselben relativ zueinander lösbar sind, so dass der abgetrennte Baumteil mit dem ihm zugeordneten Schenkel oder Schenkelteil absenkbar ist,
**dadurch gekennzeichnet,**
**dass** der Bolzen (2) als von den Schenkeln (11, 11') separates Teil ausgebildet und axial herausziehbar ist.

2. Haltevorrichtung nach Anspruch 1,
**dadurch gekennzeichnet,**
**dass** der Bolzen konisch ausgeführt ist.

3. Haltevorrichtung nach Anspruch 1 oder 2,
**dadurch gekennzeichnet,**
**dass** an den Schenkeln des Scharniers (1) halbrunde oder winkelförmige Befestigungsteile (3a und 3b) befestigt sind.

4. Haltevorrichtung nach Anspruch 3,
**dadurch gekennzeichnet,**
**dass** die Befestigungsteile (3a und 3b) auf der Innenseite Verkrallungszapfen (7) oder -spitzen aufweisen.

5. Haltevorrichtung nach Anspruch 3 oder 4,
**dadurch gekennzeichnet,**
**dass** Befestigungsteile (3a und 3b) Aufnahmeteile (4), z. B. mindestens eine Öse, mindestens eine Bohrung oder mindestens einen Bolzen für eine Spannvorrichtung (6) aufweisen.

6. Haltevorrichtung nach einem der Ansprüche 3 bis 5,
**dadurch gekennzeichnet,**
**dass** die Befestigungsteile (3a und 3b) fest oder in sich beweglich ausgeführt sind, um sich besser dem Baumstamm anpassen zu können.

7. Haltevorrichtung nach einem der Ansprüche 2 bis 7,
**dadurch gekennzeichnet,**
**dass** der Bolzen (2) mit einer lösbaren Haltesicherung (13, 14) gehalten ist.

8. Haltevorrichtung nach einem der vorhergehenden Ansprüche,
**dadurch gekennzeichnet,**
**dass** sie eine Aufnahmevorrichtung für ein Ablassseil (8, 15) aufweist, das einerseits an dem am feststehenden Baumteil angebrachten Scharnierteil geführt und andererseits an dem am abgetrennten Baumteil angebrachten Scharnierteil angebunden ist.

## Claims

1. Device for holding tree parts during cutting thereof, having a hinge (1) of which the limbs (11, 11'), which can be pivoted about a hinge axis, can be fastened to the fixed tree part on the one hand and to the tree part to be cut off on the other and which has a bolt (2) forming a physical pivot pin, wherein the limbs (11, 11') or parts thereof are detachable with respect to one another such that the cut-off tree part can be lowered together with the limb or limb part assigned thereto,
**characterized**
**in that** the bolt (2) is in the form of a part separate from the limbs (11, 11') and can be pulled out axially.

2. Holding device according to Claim 1,
**characterized**
**in that** the bolt is conical.

3. Holding device according to Claim 1 or 2,
**characterized**
**in that** semicircular or angular securing parts (3a and 3b) are secured to the limbs of the hinge (1).

4. Holding device according to Claim 3,
**characterized**
**in that** the securing parts (3a and 3b) have gripping pins (7) or spikes on the inside.

5. Holding device according to Claim 3 or 4,
**characterized**
**in that** the securing parts (3a and 3b) have accommodating parts (4), for example at least one eyelet, at least one bore or at least one bolt for a tensioning device (6).

6. Holding device according to one of Claims 3 to 5,
**characterized**
**in that** the securing parts (3a and 3b) have a fixed or inherently movable design in order that they can be adapted better to the tree trunk.

7. Holding device according to one of Claims 2 to 7,
**characterized**
**in that** the bolt (2) is held by a detachable holding and securing means (13, 14).

8. Holding device according to one of the preceding claims,
**characterized**
**in that** it has an accommodating device for a lowering rope (8, 15), which on the one hand is guided on the hinge part attached to the fixed tree part and on the other hand is tied to the hinge part attached to the cut-off tree part.

## Revendications

1. Dispositif de retenue pour retenir des parties ligneuses en train d'être sciées, présentant une charnière (1), dont la branche (11, 11') pouvant pivoter autour d'un axe de charnière peut être fixée respectivement d'une part à la partie ligneuse fixe et d'autre part à la partie ligneuse à scier et présente en tant qu'axe de pivotement physique un boulon (2), les branches (11, 11') ou des parties de celles-ci pouvant être desserrées relativement l'une par rapport à l'autre, de sorte que la partie ligneuse sciée puisse être descendue avec la branche ou la partie de branche qui lui est associée,
**caractérisé en ce que**
le boulon (2) est réalisé sous forme de partie séparée des branches (11, 11') et peut être ressorti axialement.

2. Dispositif de retenue selon la revendication 1,
**caractérisé en ce que**
le boulon est réalisé sous forme conique.

3. Dispositif de retenue selon la revendication 1 ou 2,
**caractérisé en ce que**
des parties de fixation semi-circulaires ou angulaires (3a et 3b) sont fixées sur les branches de la charnière (1).

4. Dispositif de retenue selon la revendication 3,
**caractérisé en ce que**
les parties de fixation (3a et 3b) présentent, sur le côté intérieur, des tourillons ou des pointes d'accrochage (7).

5. Dispositif de retenue selon la revendication 3 ou 4,
**caractérisé en ce que**
les parties de fixation (3a et 3b) présentent des parties de réception (4), par exemple au moins un oeillet, au moins un alésage ou au moins un boulon pour un dispositif de serrage (6).

6. Dispositif de retenue selon l'une quelconque des revendications 3 à 5,
**caractérisé en ce que**
les parties de fixation (3a et 3b) sont réalisées de manière fixe ou mobiles en soi, afin de pouvoir mieux s'adapter au tronc de l'arbre.

7. Dispositif de retenue selon l'une quelconque des revendications 2 à 7,
**caractérisé en ce que**
le boulon (2) est retenu avec une fixation de retenue desserrable (13, 14).

8. Dispositif de retenue selon l'une quelconque des revendications précédentes,
**caractérisé en ce**
**qu'**il présente un dispositif de retenue pour un câble de descente (8, 15), qui est guidé d'une part sur la partie de charnière montée sur la partie ligneuse fixe et d'autre part qui est relié à la partie de charnière montée sur la partie ligneuse sciée.
